# EUROPEAN PATENT APPLICATION

(11) **EP 4 661 533 A2**
(43) Date of publication of application: **10.12.2025**
(21) Application number: 25210303.1
(22) Date of filing: 02.05.2022
(51) Int. Cl.: H04W 68/12

(54) **COMMUNICATION CONTROL METHOD**

(30) Priority: 10.05.2021 US 202163186536 P
(62) Divisional of application: 22807393.8
(71) Applicant: Kyocera Corporation, Kyoto-shi, Kyoto 612-8501 (JP)
(72) Inventor: FUJISHIRO, Masato, Kyoto-shi, Kyoto, 612-8501 (JP); CHANG, Henry, San Diego, 92123 (US)
(74) Representative: Viering, Jentschura & Partner mbB Patent- und Rechtsanwälte

(57) **Abstract**

A communication control method according to a first aspect is performed by a user equipment in a mobile communication system for providing a multicast service to the user equipment, the communication control method including monitoring a paging message transmitted from a base station. The monitoring includes: monitoring, when an early paging notification signal is received from the base station, a first paging message that calls one or more user equipments being targets of unicast communication; and monitoring, when the user equipment has joined or is interested in a multicast session, a second paging message that notifies that one or more multicast sessions have been activated even when the early paging notification signal has not been received.

## Description

### TECHNICAL FIELD

The present disclosure relates to a communication control method used in a mobile communication system.

### BACKGROUND OF INVENTION

A fifth generation (5G) mobile communication system has been attracting attention in recent years. New Radio (NR), which is a Radio Access Technology (RAT) of the 5G system, has features such as high speed, large capacity, high reliability, and low latency compared to Long Term Evolution (LTE), which is a fourth-generation radio access technology.

### CITATION LIST

### NON-PATENT LITERATURE

Non-Patent Document 1: 3GPP technical specifications "3GPP TS 38.300 V16.5.0 (2021-03)"

### SUMMARY

Introduction of multicast broadcast services to the 5G system (NR) has been under study. NR multicast broadcast services are expected to provide enhanced services as compared to LTE multicast broadcast services.

The present disclosure provides a communication control method for realizing improved multicast broadcast services.

A communication control method according to a first aspect is performed by a user equipment in a mobile communication system for providing a multicast service to the user equipment, the communication control method including monitoring a paging message transmitted from a base station. The monitoring includes: monitoring, when an early paging notification signal is received from the base station, a first paging message that calls one or more user equipments being targets of unicast communication; and monitoring, when the user equipment has joined or is interested in a multicast session, a second paging message that notifies that one or more multicast sessions have been activated even when the early paging notification signal has not been received.

A communication control method according to a second aspect is performed by a user equipment in a mobile communication system for providing a multicast service to the user equipment, the communication control method including: receiving, from a base station, an early paging notification signal relating to a multicast session; and performing, when the user equipment has joined or is interested in the multicast session, processing of determining whether the multicast session has been activated based on the early paging notification signal.

A communication control method according to a third aspect is performed by a user equipment in a mobile communication system for providing a multicast service to the user equipment, the communication control method including: receiving, from a base station, an RRC reconfiguration message for establishing a multicast bearer for the user equipment in an RRC connected state. The RRC reconfiguration message includes a multicast session identifier indicating a multicast session associated with the multicast bearer.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating a correspondence relationship between downlink Logical channels and downlink Transport channels according to an embodiment.
FIG. 7 is a diagram illustrating a delivery method of MBS data according to an embodiment.
FIG. 8 illustrates a split MBS bearer according to an embodiment.
FIG. 9 is a diagram illustrating an operation example regarding an early paging notification signal according to an embodiment.
FIG. 10 is a diagram showing a configuration example of a paging message used as a group notification.
FIG. 11 is a diagram showing another configuration example of a paging message used as a group notification.
FIG. 12 is a diagram illustrating an operation example according to a first embodiment.
FIG. 13 is a diagram illustrating a first operation example according to a second embodiment.
FIG. 14 is a diagram illustrating a second operation example according to the second embodiment.
FIG. 15 is a diagram illustrating an operation example according to a third embodiment.

### DESCRIPTION OF EMBODIMENTS

A mobile communication system according to embodiments will be described with reference to the drawings. In the description of the drawings, the same or similar parts are denoted by the same or similar reference numerals.

### First Embodiment

### Configuration of Mobile Communication System

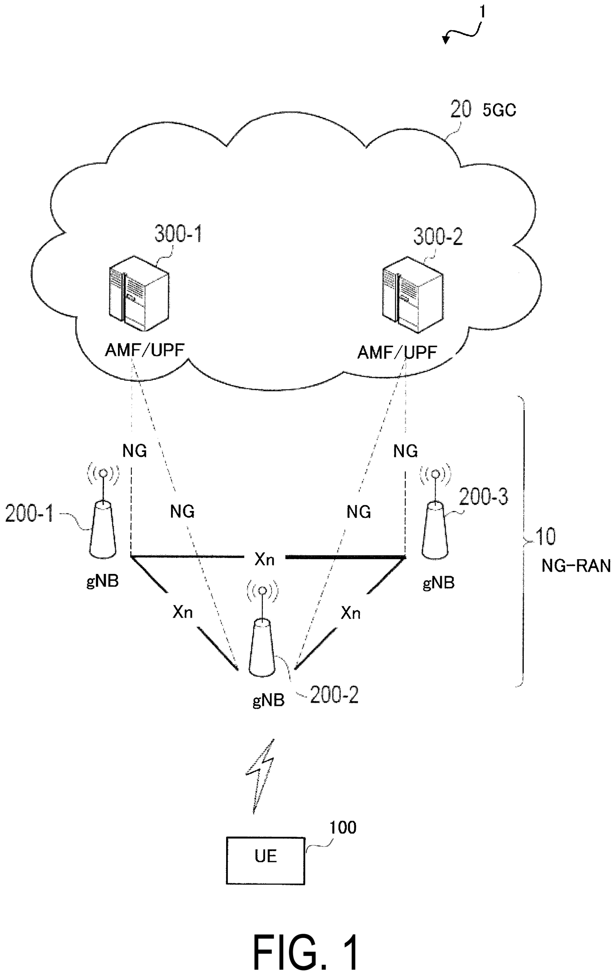

First, a configuration of a mobile communication system according to an embodiment is described. FIG. 1 is a diagram illustrating a configuration of a mobile communication system according to an embodiment. This mobile communication system complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

As illustrated in FIG. 1, the mobile communication system includes a user equipment (UE) 100, a 5G radio access network (next generation radio access network (NG-RAN)) 10, and a 5G core network (5GC) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and/or a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

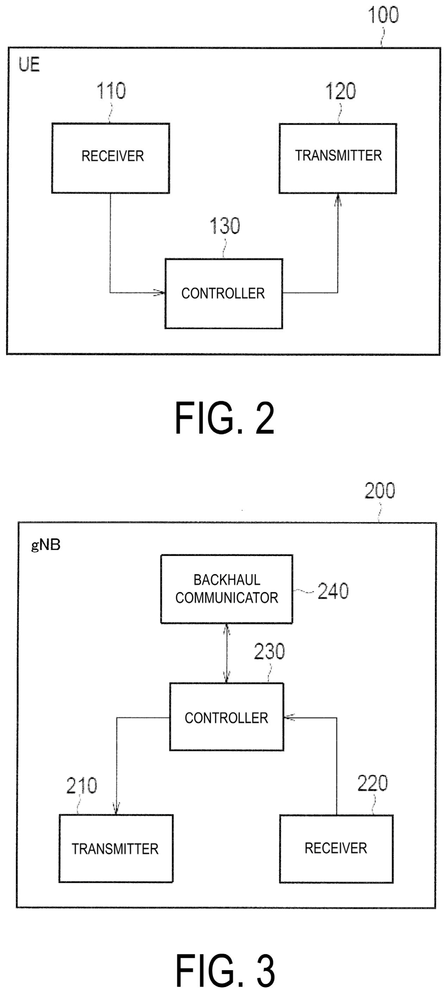

FIG. 2 is a diagram illustrating a configuration of the user equipment (UE) 100 according to an embodiment.

As illustrated in FIG. 2, the UE 100 includes a receiver 110, a transmitter 120, and a controller 130.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control in the UE 100. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

FIG. 3 is a diagram illustrating a configuration of the gNB 200 (base station) according to an embodiment.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

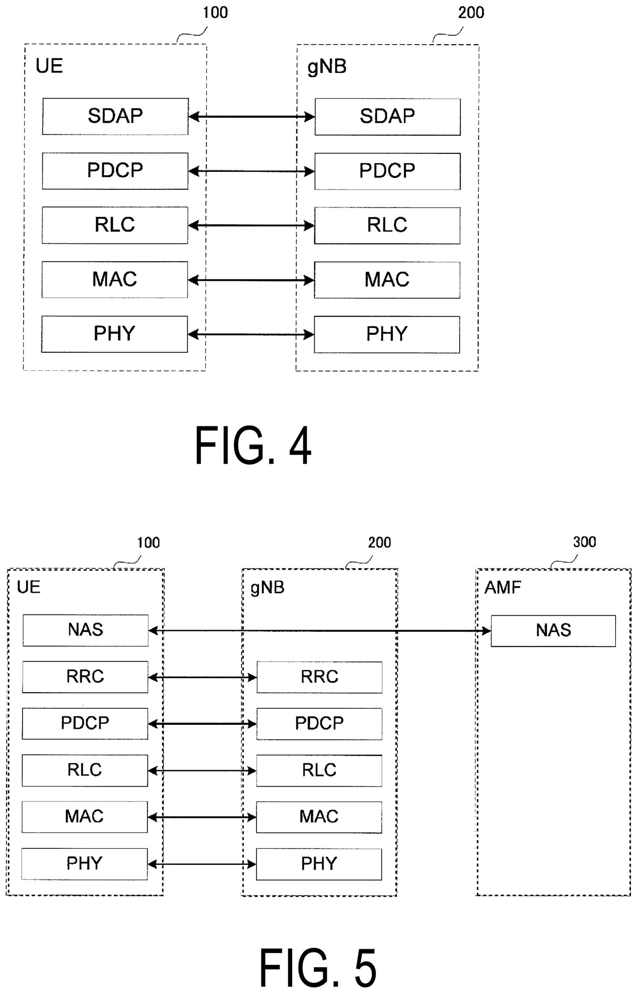

FIG. 4 is a diagram illustrating a configuration of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transfers data to the RLC layer on the reception side by using functions of the MAC layer and the PHY layer. Data and control information are transferred between the RLC layer of the UE 100 and the RLC layer of the gNB 200 via a logical channel.

The PDCP layer performs header compression and decompression, and encryption and decryption.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

FIG. 5 is a diagram illustrating a configuration of a protocol stack of a radio interface of a control plane handling signaling (a control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the connection between the RRC of the UE 100 and the RRC of the gNB 200 is suspended, the UE 100 is in an RRC inactive state.

The NAS layer which is located above the RRC layer performs session management, mobility management, and the like. NAS signaling is transferred between the NAS layer of the UE 100 and the NAS layer of the AMF 300.

Note that the UE 100 includes an application layer other than the protocol of the radio interface.

### MBS

An MBS according to an embodiment is described. The MBS is a service in which the NG-RAN 10 can provide broadcast or multicast, i.e., Point To Multipoint (PTM) data transmission to the UE 100. The MBS may be referred to as the Multimedia Broadcast and Multicast Service (MBMS). Note that use cases (service types) of the MBS include public safety communication, mission critical communication, Vehicle to Everything (V2X) communication, IPv4 or IPv6 multicast delivery, Internet protocol television (IPTV), group communication, and software delivery.

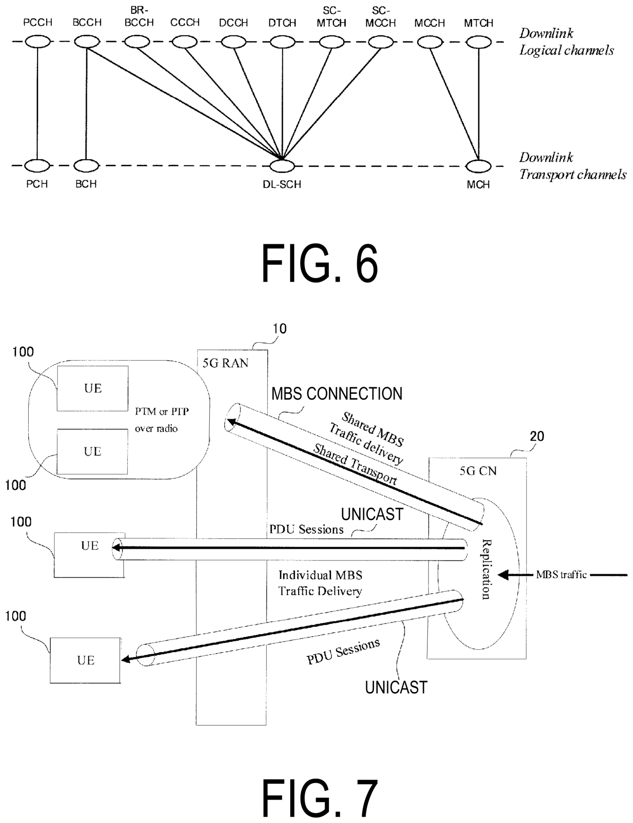

MBS Transmission in LTE includes two schemes, i.e., a Multicast Broadcast Single Frequency Network (MBSFN) transmission and Single Cell Point To Multipoint (SC-PTM) transmission. FIG. 6 is a diagram illustrating a correspondence relationship between downlink Logical channels and a downlink Transport channel according to an embodiment.

As illustrated in FIG. 6, the logical channels used for MBSFN transmission are a Multicast Traffic Channel (MTCH) and a Multicast Control Channel (MCCH), and the transport channel used for MBSFN transmission is a Multicast Control Channel (MCH). The MBSFN transmission is designed primarily for multi-cell transmission, and in an MBSFN area including a plurality of cells, each cell synchronously transmits the same signal (the same data) in the same MBSFN subframe.

The logical channels used for SC-PTM transmission are a Single Cell Multicast Traffic Channel (SC-MTCH) and a Single Cell Multicast Control Channel (SC-MCCH). The transport channel used for SC-PTM transmission is a Downlink Shared Channel (DL-SCH). The SC-PTM transmission is primarily designed for single-cell transmission and corresponds to broadcast or multicast data transmission on a cell-by-cell basis. The physical channels used for SC-PTM transmission are a Physical Downlink Control Channel (PDCCH) and a Physical Downlink Shared Channel (PDSCH) and enable dynamic resource allocation.

An example will be mainly described below in which the MBS is provided using a scheme same as, and/or similar to, the SC-PTM transmission scheme. However, the MBS may also be provided using the MBSFN transmission scheme. An example will be mainly described in which the MBS is provided using multicast. Accordingly, the MBS may be interpreted as multicast. Note that the MBS may be provided using broadcast.

MBS data refers to data provided by the MBS. An MBS control channel refers to an MCCH or an SC-MCCH. An MBS traffic channel refers to an MTCH or an SC-MTCH. Note that the MBS data may be transmitted in unicast. The MBS data may be referred to as MBS packets or MBS traffic.

The network can provide different MBS services for respective MBS sessions. The MBS session is identified by at least one of Temporary Mobile Group Identity (TMGI) and a session identifier, and at least one of these identifiers is referred to as an MBS session identifier. Such an MBS session identifier may be referred to as an MBS service identifier or a multicast group identifier.

FIG. 7 is a diagram illustrating a delivery method of the MBS data according to an embodiment.

As illustrated in FIG. 7, the MBS data (MBS Traffic) is delivered from a single data source (application service provider) to a plurality of UEs. The 5G CN (5GC) 20, which is a 5G core network, receives the MBS data from the application service provider and performs Replication of the MBS data to deliver the resultant.

From the perspective of the 5GC 20, two delivery methods are possible: shared MBS data delivery (Shared MBS Traffic delivery) and individual MBS data delivery (Individual MBS Traffic delivery).

In the shared MBS data delivery, a connection is established between the NG-RAN 10 that is a 5G radio access network (5G RAN) and the 5GC 20 to deliver the MBS data from the 5GC 20 to the NG-RAN 10. Such a connection (a tunnel) is hereinafter referred to as an "MBS connection".

The MBS connection may be referred to as a Shared MBS Traffic delivery connection or a shared transport. The MBS connection terminates at the NG-RAN 10 (i.e., the gNB 200). The MBS connection may correspond to an MBS session on a one-to-one basis.

The gNB 200 selects a transmission scheme either of Point-to-Point (PTP: unicast) or Point-to-Multipoint (PTM: multicast or broadcast) at the discretion of the gNB 200 and transmits the MBS data to the UE 100 through the selected transmission scheme.

On the other hand, in the individual MBS data delivery, a unicast session is established between the NG-RAN 10 and the UE 100 to individually deliver the MBS data from the 5GC 20 to the UE 100. Such unicast may be referred to as a PDU Session. The unicast (PDU session) terminates at the UE 100.

### Split MBS bearer

A split MBS bearer according to an embodiment is described.

The gNB 200 may establish an MBS bearer split into a PTP communication path and a PTM communication path (hereinafter referred to as a "split MBS bearer" as appropriate) for the UE 100. This allows the gNB 200 to dynamically switch the transmission of the MBS data to the UE 100 between the PTP (PTP communication path) and the PTM (PTM communication path). The gNB 200 may perform duplicate transmission of the same MBS data using both the PTP (PTP communication path) and the PTM (PTM communication path) to enhance reliability.

A predetermined layer terminating the split is the MAC layer (HARQ), the RLC layer, the PDCP layer, or the SDAP layer. Although an example in which the predetermined layer terminating the split is the PDCP layer will be mainly described below, the predetermined layer may be the MAC layer (HARQ), the RLC layer, or the SDAP layer.

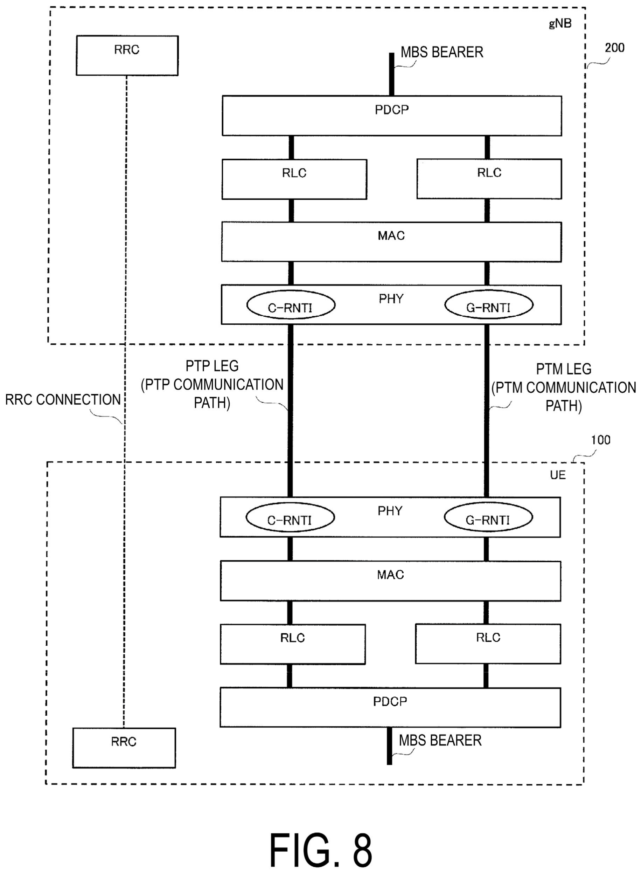

FIG. 8 is a diagram illustrating the split MBS bearer according to an embodiment. Hereinafter, the PTP communication path is referred to as a PTP leg, and the PTM communication path is referred to as a PTM leg. A functional unit corresponding to each layer is referred to as an entity.

As illustrated in FIG. 8, each of the PDCP entity of the gNB 200 and the PDCP entity of the UE 100 splits an MBS bearer, which is a bearer (data radio bearer) used for the MBS, into a PTP leg and a PTM leg. Note that the PDCP entity is provided for each bearer.

Each of the gNB 200 and the UE 100 includes two RLC entities provided for the respective legs, one MAC entity, and one PHY entity. The PHY entity may be provided per leg. Note that, in Dual Connectivity in which the UE 100 communicates with two gNBs 200, the UE 100 may include two MAC entities.

The PHY entity transmits and receives data of the PTP leg using a cell RNTI (Cell Radio Network Temporary Identifier (C-RNTI)) that is allocated to the UE 100 on a one-to-one basis. The PHY entity transmits and receives data of the PTM leg using a group RNTI (Group Radio Network Temporary Identifier (G-RNTI)) allocated to the MBS session on a one-to-one basis. The C-RNTI is different for each UE 100, but the G-RNTI is an RNTI common to a plurality of UEs 100 receiving one MBS session.

In order to perform PTM transmission of the MBS data (multicast or broadcast) from the gNB 200 to the UE 100 using a PTM leg, a split MBS bearer needs to be established for the UE 100 from the gNB 200 and the PTM leg needs to be activated. In other words, even if a split MBS bearer is established for the UE 100, when a PTM leg is in a deactivated state, the gNB 200 cannot perform the PTM transmission of the MBS data using the PTM leg.

In order that the gNB 200 and the UE 100 perform PTP transmission of the MBS data (unicast) using a PTP leg, a split MBS bearer needs to be established for the UE 100 from the gNB 200 and the PTP leg needs to be activated. In other words, even if a split MBS bearer is established for the UE 100, when a PTP leg is in a deactivated state, the gNB 200 cannot perform the PTP transmission of the MBS data using the PTP leg.

When the PTM leg is in an activated state, the UE 100 monitors a Physical Downlink Control Channel (PDCCH) to which a G-RNTI associated with the MBS session is applied (i.e., performs blind decoding of the PDCCH using the G-RNTI). The UE 100 may monitor the PDCCH only at a scheduling occasion of the MBS session.

When the PTM leg is in a deactivated state, the UE 100 does not monitor a PDCCH to which a G-RNTI associated with the MBS session is applied (i.e., does not perform blind decoding of the PDCCH using the G-RNTI).

When the PTP leg is in an activated state, the UE 100 monitors a PDCCH to which a C-RNTI is applied. When Discontinuous Reception (DRX) in the PTP leg is configured, the UE 100 monitors a PDCCH for a configured OnDuration period. When a cell (frequency) associated with the MBS session is specified, the UE 100 may monitor a PDCCH for the cell even when the cell is deactivated.

When the PTP leg is in a deactivated state, the UE 100 may monitor a PDCCH to which a C-RNTI is applied in preparation for normal unicast downlink transmission of other than the MBS data. Note that, when a cell (frequency) associated with an MBS session is specified, the UE 100 need not monitor a PDCCH for the MBS session. Note that the PTP leg and/or the PTM leg may be always active. In this case, as long as a split MBS bearer has been established, a PTP leg and/or a PTM leg associated with the split MBS bearer is in an active state and need not be activated and deactivated.

Note that it is assumed that the above-described split MBS bearer is configured by use of an RRC message (for example, an RRC Reconfiguration message) transmitted by the RRC entity of the gNB 200 to the RRC entity of the UE 100.

### Early Paging Notification Signal

An early paging notification signal according to an embodiment is described.

The early paging notification signal is a signal that is transmitted from the gNB 200 to a group consisting of a plurality of the UEs 100. The early paging notification signal is a signal for suppressing the UE 100 from monitoring a paging message transmitted from the gNB 200.

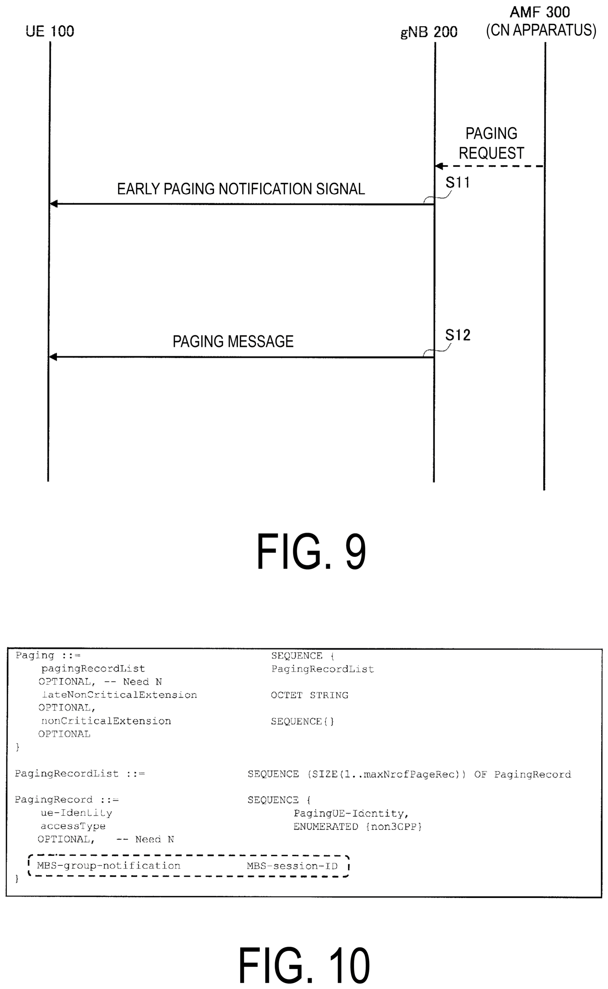

FIG. 9 is a diagram illustrating an operation example regarding an early paging notification signal according to an embodiment.

When data to be transmitted to the UE 100 occurs, the gNB 200 determines to transmit a paging message addressed to the UE 100 to which data is to be transmitted (a paging target UE). The gNB 200 may determine to transmit a paging message addressed to the UE 100 having been requested to be paged (paging target UE) in response to a paging request from the AMF 300 being a core network apparatus (CN apparatus).

A plurality of the UEs 100 subordinate to the gNB 200 are grouped, and for example, one UE 100 belongs to one group. The gNB 200 identifies a group to which the paging target UE belongs and transmits an early paging notification signal to the identified group (step S11).

The early paging notification signal is a signal including a signal sequence associated with the group or a signal transmitted using a resource associated with the group. The UE 100 can monitor the early paging notification signal with a small amount of power. Such an early paging notification signal may be referred to as a Wake-Up Signal (WUS) or a UE-Group WUS (GWUS). The early paging notification signal may be paging downlink control information (DCI) transmitted over a physical downlink control channel (PDCCH).

Upon receiving the early paging notification signal addressed to the group to which the UE 100 belongs, the UE 100 considers that a paging message addressed to the UE 100 may be transmitted from the gNB 200 and monitors for a paging message to be transmitted from the gNB 200. The timing of monitoring the paging message is a paging opportunity (PO) of a paging frame (PF). The UE 100 receives the paging message at the PF/PO (step S12) and determines whether the received paging message includes its own identifier. The paging message is one of RRC messages and is transmitted over a physical downlink shared channel (PDSCH). Processing for receiving a paging message involves demodulation and decoding and therefore requires greater power consumption than processing for receiving an early paging notification signal.

If the received paging message includes its own identifier, the UE 100 considers itself to be paged and transmits a paging response to the gNB 200. When the UE 100 in an RRC idle state or an RRC inactive state is to be paged, the UE 100 performs a random access procedure on the gNB 200 to transition to an RRC connected state.

In this way, since the UE 100 monitors a paging message only when an early paging notification signal has been received, the number of times the UE 100 monitors a paging message can be reduced. This reduces the processing load and power consumption of the UE 100. The early paging notification signal is a function independent of an MBS and differs from a group notification which will be described below.

### Group Notification

A group notification according to an embodiment is described.

The following description mainly assumes that the UE 100 in an RRC connected state receives MBS data (i.e., multicast data) transmitted by multicast from the gNB 200. Thus, it is assumed that an MBS session is a multicast session and an MBS session identifier is a multicast session identifier (e.g., a TMGI, a session ID, or a G-RNTI). A multicast session is mapped to a PTM leg or a PTM bearer (multicast bearer). An MBS traffic channel (MTCH) is used for multicast data transmission from the gNB 200 to the UE 100.

The following description also assumes operations of the UE 100 for transitioning to an RRC idle state or an RRC inactive state after joining a multicast session and then waiting for the start of the multicast session. "Joining a multicast session" indicates registering the UE 100 in the CN apparatus as a member of a UE group (multicast group) that receives the multicast session. The UE 100 may join a multicast session while the multicast session is active (is being transmitted). The UE 100 may also join a multicast session while the multicast session is in an invalid state (the transmission thereof is ready to start or is being suspended).

In an RRC idle state or an RRC inactive state, the UE 100 receives a group notification that is transmitted from the gNB 200 to a group to which the UE 100 belongs. The group notification is a message that, when an MBS session (specifically, a multicast session) is activated, calls UEs 100 that have joined the multicast session. A group notification may be transmitted in response to a multicast session being activated from an inactive state. Activation of a multicast session may be the start of transmission of multicast data in a target multicast session. Activation of a multicast session may also be entering a state in which the start of transmission of multicast data in a target multicast session is possible. A group notification may notify of the start of a multicast session. The UE 100 transitions to an RRC connected state in response to receiving a group notification and receives multicast data of the multicast session from the gNB 200.

A paging message transmitted by the gNB 200 or a message transmitted over an MBS control channel (MCCH) can be used as a group notification. In the following description, however, it is assumed that a paging message is used as a group notification. A group notification includes identifiers of one or more activated multicast sessions (multicast session identifiers).

FIG. 10 is a diagram showing a configuration example of a paging message used as a group notification. The paging message includes a paging record list (PagingRecordList) which is a list of paging records (PagingRecord). Each paging record (PagingRecord) includes a UE identifier (ue-Identity) of a UE to be paged. Each paging record (PagingRecord) may further include an access type (accessType). The paging message further includes a multicast session identifier (MBS-session-ID) of an activated multicast session as a group notification (MBS-group-notification). Thus, in a first configuration example of the paging message, a UE identifier (ue-Identity) and a multicast session identifier (MBS-session-ID) are associated with each other.

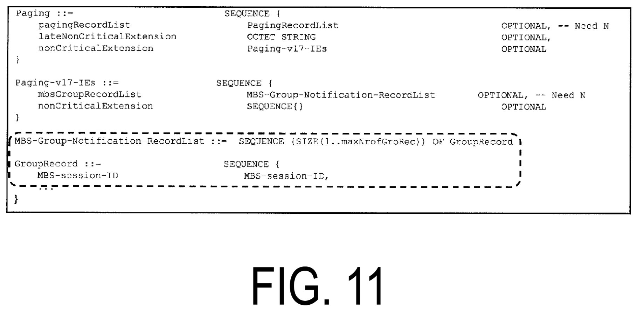

FIG. 11 is a diagram showing another configuration example of a paging message used as a group notification. The paging message includes a multicast session identifier list (MBS-Group-Notification-RecordList), which is a list of multicast session identifiers (MBS-session-ID) of one or more activated multicast sessions, as an information element independent of the paging record list (PagingRecordList).

Thus, a paging message used as a group notification includes one or more multicast session identifiers. In contrast, a normal paging message includes UE identifiers but not multicast session identifiers. In the following description, a normal paging message that does not include multicast session identifiers is referred to as a first paging message and a paging message that is used as a group notification is referred to as a second paging message.

In another example, a paging message used as a group notification includes only a list of paging records (PagingRecord). A UE identifier (ue-Identity) included in each paging record (PagingRecord) can store a special UE identifier in addition to a normal UE identifier. The special UE identifier is associated with a multicast session (or a multicast session identifier). The AMF 300 or the gNB 200 notifies the UE 100 of the association information in advance. Upon detecting that the paging record includes the special UE identifier, the UE 100 determines that a group notification for the corresponding multicast session has been provided. This method makes it possible for a group notification for an MBS to be provided without changing the information elements of the paging message.

Communication Control Method According to First Embodiment A communication control method according to a first embodiment is described. The first embodiment assumes a scenario in which a paging message is used as a group notification under the premise that the early paging notification signal described above is used.

In such a scenario, the UE grouping of the early paging notification signal differs from the UE grouping of the group notification. When the early paging notification signal is used, a delay may occur in transmission and reception of the paging message because the paging message is transmitted after the early paging notification signal is transmitted.

The first embodiment is an embodiment that aims to solve such a problem through the following operations. Specifically, the communication control method according to the first embodiment is performed by the UE 100 in the mobile communication system 1 for providing a multicast service to the UE 100, the communication control method including monitoring a paging message transmitted from the gNB 200. The monitoring includes: monitoring, when an early paging notification signal has been received from the gNB 200, a first paging message that calls one or more UEs 100 being targets of unicast communication; and monitoring, when the UE 100 has joined or is interested in a multicast session, a second paging message (a group notification) that notifies that one or more multicast sessions have been activated even when the early paging notification signal has not been received. Here, "being interested in a multicast session" indicates that a higher layer of the UE 100 requests or prefers to receive the multicast session. The higher layer includes an NAS layer. The higher layer may further include an application layer.

The UE 100 which has joined or is interested in a multicast session monitors a second paging message (a group notification) even when the early paging notification signal has not been received as described above. Thus, the second paging message can be appropriately received even when the UE grouping of the early paging notification signal and the UE grouping of the group notification differ. Delays can also be reduced in transmission and reception of the second paging message because the gNB 200 does not need to transmit the early paging notification signal prior to transmission of the second paging message.

The first paging message includes identifiers (UE identifiers) of one or more UEs 100 being targets of unicast communication as described above. The second paging message may include identifiers (multicast session identifiers) of one or more activated multicast sessions. The second paging message may or may not include the UE identifiers.

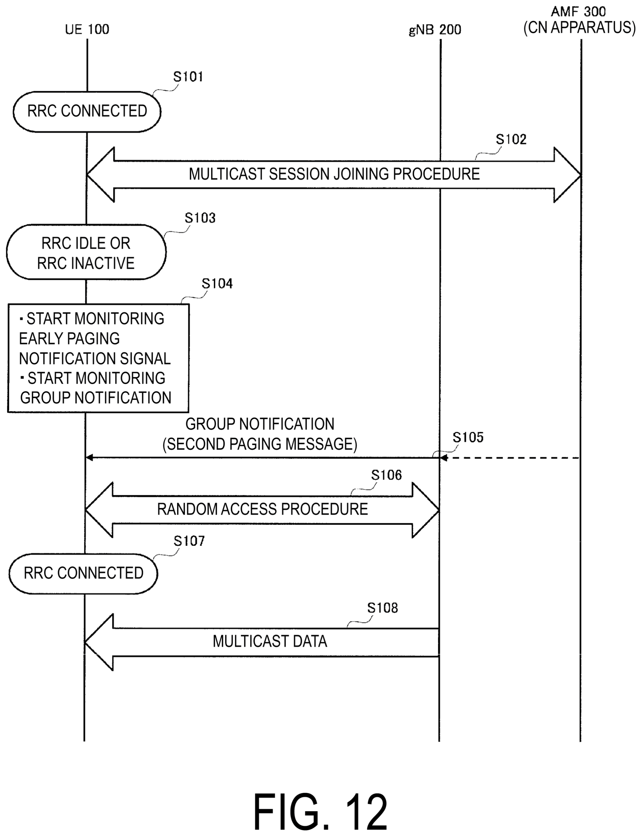

FIG. 12 is a diagram illustrating an operation example according to the first embodiment. Hereinafter, the gNB 200 and the AMF 300 are collectively referred to as a "network" as appropriate. The AMF 300 is an example of a core network apparatus (CN apparatus). The AMF 300 manages MBS sessions (multicast sessions) in cooperation with a session management apparatus. The session management apparatus is another example of a CN apparatus.

In step S101, the UE 100 is in an RRC connected state. It is assumed that the UE 100 is interested in a certain multicast session (hereinafter referred to as a "target multicast session").

In step S102, the UE 100 (NAS entity) performs on the network a multicast session joining procedure for joining the target multicast session. For example, the UE 100 joins the target multicast session by transmitting, to the AMF 300, a first NAS message making a request to join the target multicast session and receiving, from the AMF 300, a second NAS message approving joining the target multicast session.

In step S103, the UE 100 transitions to an RRC idle state or an RRC inactive state. Specifically, the UE 100 transitions to an RRC idle state or an RRC inactive state by receiving an RRC release message from the gNB 200. Prior to step S103, the UE 100 may transmit, to the gNB 200, an RRC message (e.g., a UE assistance information message) including an information element prompting the transition of the UE 100 to an RRC idle state or an RRC inactive state. The gNB 200 may determine to transition the UE 100 to an RRC idle response or an RRC inactive state in response to the multicast session in which the UE 100 is interested in being in an inactive state.

The gNB 200 performs a configuration of an early paging notification signal for the UE 100. The configuration may be broadcast, included in a system information block. The configuration may also be performed for the UE 100 through dedicated signaling (an RRC release message or an RRC reconfiguration message). The configuration includes at least one of information on the time/frequency/sequence at which the early paging notification signal is transmitted, UE grouping information, and transmission power boost information.

In step S104, the UE 100 starts monitoring the early paging notification signal. The UE 100 starts monitoring a group notification (a second paging message). For example, the UE 100 may start monitoring a group notification (a second paging message) in response to satisfaction of one or more of the four conditions: 1) that the UE 100 is interested in receiving a multicast session, 2) that the UE 100 has already joined a multicast session, 3) that the gNB 200 has performed a configuration for a multicast session (a configuration for a multicast radio bearer), and 4) that a delay in starting receiving a multicast session is determined to be unacceptable. A predetermined PF/PO used as the timing of monitoring the group notification (second paging message) may be the same as the PF/PO of the first paging message. The predetermined PF/PO used as the timing of monitoring the group notification (second paging message) may also differ from the PF/PO of the first paging message. Under the assumption that the second paging message does not include UE identifiers, the UE 100 may monitor the second paging message at a PF/PO other than its own PF/PO (at the PF PO of another UE) if the delay is unacceptable.

In step S105, the gNB 200 transmits a second paging message including a multicast session identifier of the target multicast session in response to the target multicast session being activated in the network. The gNB 200 may also transmit a second paging message in response to a paging request from the AMF 300. The UE 100 receives the second paging message at the predetermined PF/PO even when the early paging notification signal has not been received. When the second paging message includes a multicast session identifier of a multicast session in which the UE 100 is interested, the UE 100 recognizes that the multicast session has been activated.

In step S106, the UE 100 performs a random access procedure on the gNB 200 to receive the target multicast session. The UE 100 may incorporate information indicating a connection request for the multicast session or information indicating a connection request due to receiving a group notification for the multicast session into an RRC setup request message or an RRC resume request message that is transmitted to the gNB 200 in the random access procedure, for example, as an establishment (or resume) cause.

In step S107, the UE 100 transitions to an RRC connected state through the random access procedure. At this stage, the UE 100 may notify the gNB 200 of information indicating a connection request for the multicast session or information indicating a connection request due to receiving a group notification for the multicast session.

In step S108, the UE 100 receives multicast data of the target multicast session from the gNB 200 in an RRC connected state. The UE 100 may be configured to receive the target multicast session from the gNB 200 before receiving the multicast data. The configuration is, for example, an RRC reconfiguration message including a multicast radio bearer (MRB) configuration.

### Second Embodiment

Differences between a communication control method according to a second embodiment and the communication control method according to the first embodiment described above are mainly described.

The second embodiment is an embodiment in which the early paging notification signal is also applied to the second paging message. The second embodiment is an embodiment in which the early paging notification signal has the function of the second paging message. Specifically, the gNB 200 notifies the UE 100 of multicast using the early paging notification signal. This allows the early paging notification signal to be utilized in a multicast service.

The communication control method according to the second embodiment is performed by the UE 100 in the mobile communication system 1 for providing a multicast service to the UE 100, in which the communication control method includes: receiving, from the gNB 200, an early paging notification signal; and performing, when the UE 100 has joined or is interested in the multicast session, a process of determining whether a multicast session has been activated based on the early paging notification signal.

In the second embodiment, the early paging notification signal may be transmitted from the gNB 200 using a resource associated with one or more activated multicast session identifiers. The resource refers to a time-frequency resource and/or a signal sequence. The early paging notification signal may be a signal configured the same as or similarly to the WUS or GWUS described above. Such an early paging notification signal is hereinafter referred to as an "MBS WUS." This allows the UE 100 that has received the early paging notification signal (MBS WUS) to identify one or more activated multicast sessions from a resource applied to the early paging notification signal.

In the second embodiment, the early paging notification signal may include multicast session information associated with one or more activated multicast session identifiers. The multicast session information may be one or more activated multicast session identifiers or indices thereof. The multicast session information may also be information in the form of a bitmap with bit positions indicating one or more activated multicast sessions. The early paging notification signal may be a signal configured the same as or similarly to the paging DCI described above. Such an early paging notification signal is hereinafter referred to as "MBS paging DCI." This allows the UE 100 that has received the early paging notification signal (MBS paging DCI) to identify one or more activated multicast sessions from multicast session information included in the early paging notification signal.

In the second embodiment, the UE 100 that has received an early paging notification signal (an MBS WUS or MBS paging DCI) may monitor a paging message that notifies that a multicast session (a second paging message) has been activated when one or more multicast session identifiers associated with the received early paging notification signal indicate a multicast session which the UE 100 has joined or is interested in. The UE 100 determines that the multicast session has been activated upon receiving the paging message from the gNB 200.

The UE 100 that has received an early paging notification signal (an MBS WUS or MBS paging DCI) may determine that a multicast session which the UE 100 has joined or is interested in has been activated when a multicast session identifier associated with the early paging notification signal indicates the multicast session. In this case, the UE 100 need not monitor the second paging message.

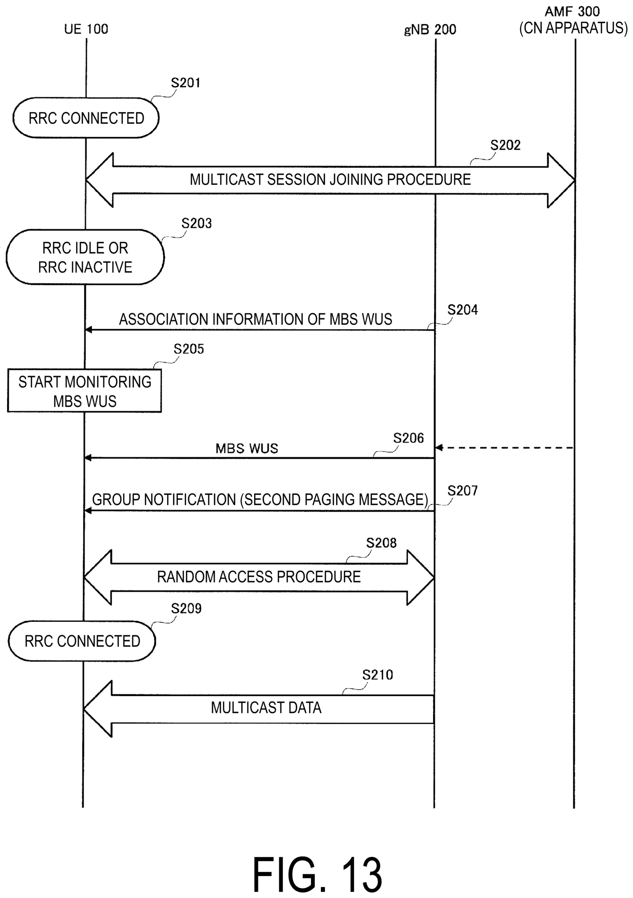

FIG. 13 is a diagram illustrating a first operation example according to the second embodiment. In the first operation example, it is assumed that the early paging notification signal is an MBS WUS.

The operations of steps S201 to S203 are the same as or similar to those of the first embodiment described above.

In step S204, the gNB 200 notifies the UE 100 of association information between a WUS resource (a signal sequence and/or a radio resource) and a multicast notification. It is mainly assumed that the gNB 200 broadcasts the association information in system information, although the association information may also be transmitted to the UE 100 in an RRC release message. Step S204 is performed at the same time as step S203 when an RRC release message is used.

The association information may be information that associates information indicating the presence or absence of a group notification with a certain WUS resource. The association information may also be information that associates one or more multicast session identifiers with each of a plurality of WUS resources. Note that when an RRC release message is used, the gNB 200 may notify of one or more WUS resources that the UE 100 is to monitor. Such an association may be a fixed association predefined in the 3GPP technical specifications.

Under the assumption that each WUS resource is associated with a multicast session identifier, the UE 100 that has received the association information may determine whether a multicast session which the UE 100 has joined or is interested in is associated with a WUS resource. If the multicast session which the UE 100 has joined or is interested in is not associated with a WUS resource, the UE 100 may perform the operation of the first embodiment described above. On the other hand, if the multicast session which the UE 100 has joined or is interested in is associated with a WUS resource, the UE 100 starts monitoring the WUS resource associated with the multicast session (step S205). The description will proceed assuming that the UE 100 has started monitoring the WUS resource.

On the other hand, under the assumption that information indicating the presence or absence of a group notification is associated with a certain WUS resource, the UE 100 starts monitoring the WUS resource (step S205).

In step S206, the gNB 200 transmits an MBS WUS using a WUS resource in response to a multicast session being activated in the network. Under the assumption that each WUS resource is associated with a multicast session identifier, the gNB 200 transmits an MBS WUS using a WUS resource associated with the activated multicast session.

The UE 100 receives (detects) the MBS WUS in the WUS resource, recognizes that a group notification (a second paging message) is to be transmitted, and starts monitoring the group notification. Specifically, the UE 100 monitors the group notification at a PF/PO of the group notification.

In step S207, the gNB 200 transmits the group notification at the PF/PO of the group notification. Upon receiving the group notification, the UE 100 recognizes that the multicast session (of interest) has been activated.

The operations of steps S208 to S210 are the same as or similar to those of the first embodiment described above.

Note that the UE 100 may start the random access procedure of step S208 without monitoring and receiving a group notification when a multicast session which the UE 100 has joined or is interested in is associated with a WUS resource under the assumption that each WUS resource is associated with a multicast session identifier.

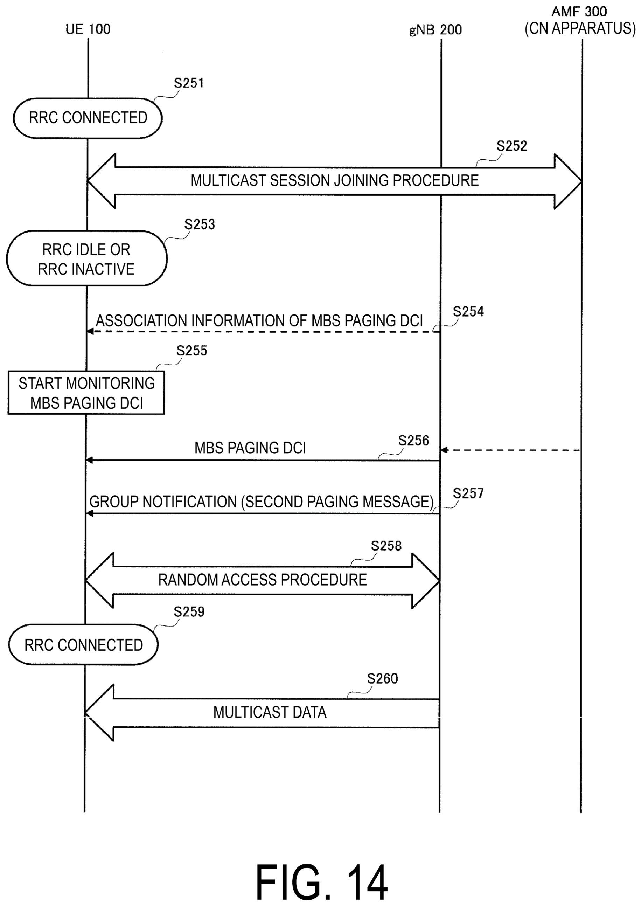

FIG. 14 is a diagram illustrating a second operation example according to the second embodiment. In the second operation example, it is assumed that the early paging notification signal is MBS paging DCI.

The operations of steps S251 to S253 are the same as or similar to those of the first embodiment described above.

In step S254, the gNB 200 may notify the UE 100 of association information between each bit of a bitmap in MBS paging DCI and a multicast notification. It is mainly assumed that the gNB 200 broadcasts the association information in system information, although the association information may also be transmitted to the UE 100 in an RRC release message. Step S254 is performed at the same time as step S253 when an RRC release message is used.

The association information may be information that associates information indicating a group notification with a certain bit (bit position). The association information may also be information that associates one or more multicast session identifiers with each bit (each bit position). Note that when an RRC release message is used, the gNB 200 may notify of one or more bits (bit positions) that the UE 100 is to monitor. Such an association may be a fixed association predefined in the 3GPP technical specifications.

In step S255, the UE 100 starts monitoring the MBS paging DCI.

In step S256, the gNB 200 transmits the MBS paging DCI over a PDCCH. Upon receiving the MBS paging DCI, the UE 100 decodes the received MBS paging DCI and checks a bitmap in the MBS paging DCI.

Under the assumption that each bit (each bit position) is associated with a multicast session identifier, the UE 100 checks a bit associated with the multicast session in which the UE 100 is interested. The UE 100 may recognize that the multicast session in which the UE 100 is interested is still inactive and may continue monitoring the MBS paging DCI if the bit is 0 and recognize that the multicast session in which the UE 100 is interested has been activated (has been brought into an active state) if the bit is 1. Such 0/1 assignments may be reversed. The UE 100 may recognize that a group notification for the multicast session is to be transmitted and start monitoring the group notification.

On the other hand, under the assumption that information indicating a group notification is associated with a certain bit (bit position), the UE 100 may recognize that a group notification is not to be transmitted and continue monitoring the MBS paging DCI if the bit is 0 and recognize that a group notification is to be transmitted and start monitoring the group notification if the bit is 1. Such 0/1 assignments may be reversed.

In step S257, the gNB 200 transmits the group notification over a PDSCH. Upon receiving the group notification, the UE 100 recognizes that the multicast session (of interest) has been activated.

The operations of steps S258 to S260 are the same as or similar to those of the first embodiment described above.

Note that the UE 100 may start the random access procedure of step S258 without monitoring and receiving a group notification when a multicast session which the UE 100 has joined or is interested in is associated with a bit with a value of "1" under the assumption that each bit (each bit position) is associated with a multicast session identifier.

### Third Embodiment

A communication control method according to a third embodiment is described mainly with respect to differences from the communication control methods according to the first and second embodiments described above.

The third embodiment relates to an operation of the UE 100 in an RRC connected state receiving an RRC reconfiguration message including a multicast radio bearer (MRB) configuration.

The gNB 200 can transmit the MRB configuration to the UE 100 in the RRC reconfiguration message to notify the UE 100 that a multicast session has been activated. Thus, a group notification is considered unnecessary for the UE 100 in an RRC connected state. However, the UE 100 may not be able to identify which multicast session has been activated because the MRB configuration is not associated with a specific service in the RRC reconfiguration message.

The communication control method according to the third embodiment is performed by the UE 100 in the mobile communication system 1 for providing a multicast service to the UE 100, in which the communication control method includes receiving, from the gNB 200, an RRC reconfiguration message for establishing an MRB for the UE 100 in an RRC connected state. The RRC reconfiguration message includes a multicast session identifier indicating a multicast session associated with the MRB. This allows the UE 100 that has received the RRC reconfiguration message establishing the MRB to identify which multicast session has been activated based on the multicast session identifier in the RRC reconfiguration message.

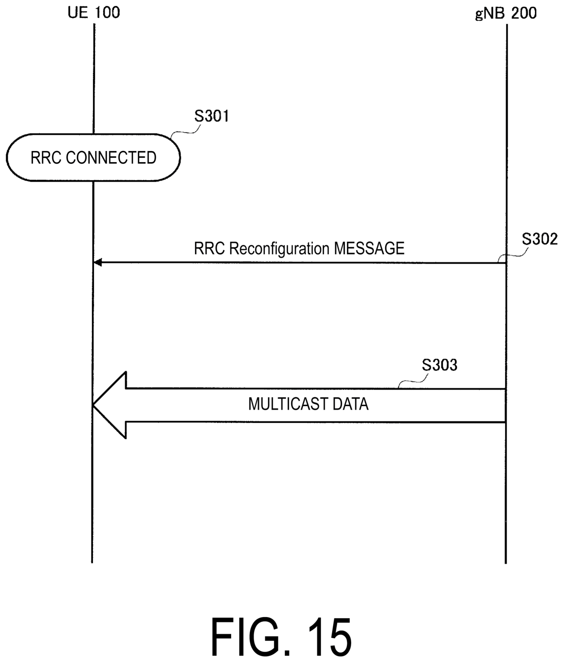

FIG. 15 is a diagram illustrating an operation example according to the third embodiment.

In step S301, the UE 100 is in an RRC connected state.

In step S302, the gNB 200 transmits an RRC reconfiguration message to the UE 100 in response to the network activating a multicast session. The RRC reconfiguration message includes an MRB configuration that includes a multicast session identifier associated with an MRB.

The UE 100 that has received the RRC reconfiguration message recognizes that the multicast session is to be started based on the multicast session identifier associated with the MRB.

The RRC entity in the UE 100 may notify an entity (e.g., a NAS entity) in a layer above the RRC entity of the multicast session identifier included in the RRC reconfiguration message. The higher layer entity may determine whether the notified multicast session identifier is a multicast session identifier of a multicast session of interest. The higher layer entity may notify the RRC entity that multicast data (a multicast traffic channel) is not to be received if the notified multicast session identifier is not the multicast session identifier of the multicast session of interest. On the other hand, the higher layer entity may notify the RRC entity that multicast data (a multicast traffic channel) is to be received if the notified multicast session identifier is the multicast session identifier of the multicast session of interest. Description will continue assuming a case where multicast data (a multicast traffic channel) is received.

In step S303, the gNB 200 transmits the multicast data to the UE 100 over a multicast traffic channel (MTCH). The UE 100 receives the multicast data.

### Other Embodiments

The operation flows described above are not necessarily implemented independently and two or more thereof can be combined and implemented. For example, some steps of one operation flow may be added to another operation flow or some steps of one operation flow may be replaced with some steps of another operation flow.

Although the above embodiments have been described with respect to examples in which a base station is an NR base stations (a gNB), a base station may be an LTE base station (an eNB). A base station may also be a relay node such as an integrated access and backhaul (IAB) node. A base station may also be a distributed unit (DU) of an IAB node.

A program that causes a computer to perform each process performed by the UE 100 or the gNB 200 may be provided. The program may be recorded on a computer readable medium. The computer readable medium allows installation of the program on a computer. The computer readable medium on which the program is recorded may be a non-transitory recording medium. The non-transitory recording medium is not particularly limited, but may be, for example, a recording medium such as a CD-ROM or a DVD-ROM. Circuits for executing the processing operations to be performed by the UE 100 or the gNB 200 may be integrated, and at least part of the UE 100 or the gNB 200 may be configured as a semiconductor integrated circuit (a chipset or a System on a chip (SoC)).

Although embodiments have been described in detail with reference to the drawings, the specific configurations thereof are not limited to those described above and various design changes can be made without departing from the spirit of the invention.

The present application claims priority to US Provisional Application No. 63/186,536 (filed May 10, 2021), the entire content of which are incorporated herein.

Further embodiments are described in the following.

### [Embodiment 1]

A communication control method to be performed by a user equipment in a mobile communication system providing a multicast service to the user equipment, the communication control method comprising:
monitoring a paging message transmitted from a base station, wherein
the monitoring comprises the steps of:
   monitoring, when an early paging notification signal is received from the base station, a first paging message that calls one or more user equipments being targets of unicast communication; and
   monitoring, when the user equipment has joined or is interested in a multicast session, a second paging message that notifies that one or more multicast sessions have been activated even when the early paging notification signal has not been received.

### [Embodiment 2]

The communication control method according to embodiment 1, wherein
the first paging message comprises an identifier of each of the one or more user equipments being the targets of the unicast communication, and
the second paging message comprises an identifier of each of the one or more activated multicast sessions.

### [Embodiment 3]

A communication control method to be performed by a user equipment in a mobile communication system for providing a multicast service to the user equipment, the communication control method comprising the steps of:
receiving, from a base station, an early paging notification signal relating to a multicast session; and
performing, when the user equipment has joined or is interested in the multicast session, processing of determining whether the multicast session has been activated based on the early paging notification signal.

### [Embodiment 4]

The communication control method according to embodiment 3, wherein the receiving comprises receiving the early paging notification signal that is transmitted using a resource associated with one or more multicast session identifiers to be activated.

### [Embodiment 5]

The communication control method according to embodiment 3, wherein the receiving comprises receiving the early paging notification signal comprising multicast session information associated with one or more multicast session identifiers to be activated.

### [Embodiment 6]

The communication control method according to embodiment 4 or 5, wherein
the performing of the processing comprises the steps of:
monitoring, when the one or more multicast session identifiers associated with the early paging notification signal indicate the multicast session that the user equipment has joined or is interested in, a paging message that notifies that the multicast session has been activated; and
determining, when the paging message is received from the base station, that the multicast session has been activated.

### [Embodiment 7]

The communication control method according to embodiment 4 or 5, wherein the performing of the processing comprises determining, when the multicast session identifier associated with the early paging notification signal indicates the multicast session that the user equipment has joined or is interested in, that the multicast session has been activated.

### [Embodiment 8]

A communication control method performed by a user equipment in a mobile communication system for providing a multicast service to the user equipment, the communication control method comprising:
receiving, from a base station, a Radio Resource Control (RRC) reconfiguration message for establishing a multicast bearer for the user equipment in an RRC connected state, wherein
the RRC reconfiguration message comprises a multicast session identifier indicating a multicast session associated with the multicast bearer.

### [Embodiment 9]

The communication control method according to embodiment 8, further comprising:
notifying, by an RRC entity in the user equipment, an entity in a higher layer than the RRC entity of the multicast session identifier comprised in the RRC reconfiguration message.

## Claims

1. A communication control method performed by a user equipment in a mobile communication system for providing Multicast/Broadcast Service, MBS, to the user equipment, the method comprising:
monitoring a paging occasion for receiving a paging message transmitted from a network node, wherein
the monitoring comprises:
monitoring the paging occasion when a paging early indication signal is received from the network node; and
when the user equipment has joined a multicast session, monitoring the paging occasion to receive a group notification indicating the activation of one or more multicast sessions, even if the paging early indication signal has not been received.

2. . A processor configured to control a user equipment that receives Multicast/Broadcast Service, MBS, from a network node, the processor configured to
monitor a paging occasion for receiving a paging message transmitted from the network node, wherein
the processor is configured to
monitor the paging occasion when a paging early indication signal is received from the network node; and
when the user equipment has joined a multicast session, monitor the paging occasion to receive a group notification indicating the activation of one or more multicast sessions, even if the paging early indication signal has not been received.

3. . A user equipment comprising the processor according to claim 2.

4. . A mobile communication system configured to provide Multicast/Broadcast Service, MBS, the mobile communication system comprising:
a user equipment configured to monitor a paging occasion for receiving a paging message transmitted from the network node, wherein
the user equipment is configured to
monitor the paging occasion when a paging early indication signal is received from the network node; and
when the user equipment has joined a multicast session, monitor the paging occasion to receive a group notification indicating the activation of one or more multicast sessions, even if the paging early indication signal has not been received.
